# EUROPEAN PATENT APPLICATION

(11) **EP 4 322 564 A1**
(43) Date of publication of application: **14.02.2024**
(21) Application number: 22210099.2
(22) Date of filing: 29.11.2022
(51) Int. Cl.: H04W 4/30, H04W 4/80

(54) **CONTROL METHOD AND APPARATUS FOR WIRELESS SMART WEARABLE DEVICE AND STORAGE MEDIUM**

(30) Priority: 09.08.2022 CN 202210949341
(71) Applicant: Beijing Xiaomi Mobile Software Co., Ltd., Beijing 100085 (CN)
(72) Inventor: ZHANG, Yu, Beijing, 100085 (CN); NIU, Kun, Beijing, 100085 (CN); CHEN, Yong, Cologne, 100085 (CN); ZHANG, Lei, Beijing, 100085 (CN); QIU, Shiding, Beijing, 100085 (CN); WANG, Kaidi, Beijing, 100085 (CN); JING, Xiaofei, Beijing, 100085 (CN)
(74) Representative: dompatent von Kreisler Selting Werner - Partnerschaft von Patent- und Rechtsanwälten mbB

(57) **Abstract**

The disclosure relates to a control method and apparatus for a wireless smart wearable device, and a storage medium. The control method for the wireless smart wearable device is performed by a terminal device displaying a preset control interface and includes: receiving (S101, S501) a control instruction for the wireless smart wearable device from the preset control interface of the terminal device; determining (S102, S502) a target device connected with the wireless smart wearable device; and transmitting (S103, S504), according to the control instruction, corresponding control information to the target device, so as to instruct the target device to control the wireless smart wearable device according to the control information.

## Description

### FIELD

The disclosure relates to the technical field of smart wearable devices, and particularly relates to a control method and apparatus for a wireless smart wearable device, and a storage medium.

### BACKGROUND

In related technologies, a wireless smart wearable device is usually controlled by a terminal device directly connected with it. With a Bluetooth headset as an example, when a terminal device is connected with the Bluetooth headset, the Bluetooth headset can be controlled only by means of related settings in the terminal device, for example, volume of the headset is adjusted by means of related settings in the terminal device.

### SUMMARY

In order to solve problems in related technologies, the present invention provides a control method and apparatus for a wireless smart wearable device, and a storage medium.

According to a first aspect of the invention, there is provided a control method for a wireless smart wearable device. The control method is performed by a terminal device displaying a preset control interface and includes:
receiving a control instruction for the wireless smart wearable device from the preset control interface of the terminal device;
determining a target device connected with the wireless smart wearable device; and
transmitting, according to the control instruction, corresponding control information to the target device, so as to instruct the target device to control the wireless smart wearable device according to the control information.

Preferably, transmitting, according to the control instruction, corresponding control information to the target device includes:
in response to determining that the target device is another terminal device, forming the control information corresponding to the control instruction by an application corresponding to the preset control interface, and transmitting the control information to the target device.

Preferably, determining the target device connected with the wireless smart wearable device includes:
determining the target device connected with the wireless smart wearable device according to a media access control (MAC) address of the wireless smart wearable device.

Preferably, receiving the control instruction of the wireless smart wearable device from the preset control interface of the terminal device includes:
receiving the control instruction on a control interface of the wireless smart wearable device, the control interface comprising an interface corresponding to an icon corresponding to the wireless smart wearable device on the preset control interface.

According to a second aspect of the invention, there is provided a control method for a wireless smart wearable device. The control method is performed by a target device and includes:
receiving control information for controlling the wireless smart wearable device; and
controlling the wireless smart wearable device according to the control information.

Preferably, controlling the wireless smart wearable device according to the control information includes:
generating a corresponding adjustment instruction according to the control information and a control protocol supported by the wireless smart wearable device; and
adjusting the wireless smart wearable device according to the adjustment instruction.

Preferably, the control protocol includes a musical instrument digital interface (MIDI) protocol.

According to a third aspect of the invention, there is provided a control apparatus for a wireless smart wearable device. The control apparatus includes:
touch screen configured to display a preset control interface;
a processor, and
a memory configured to store an instruction executable by the processor,
where the processor is configured to execute the control method according to any one of the first aspect of the examples of the disclosure.

According to a fourth aspect of the invention, there is provided a control apparatus for a wireless smart wearable device. The control apparatus includes:
a processor, and
a memory configured to store an instruction executable by the processor,
where the processor is configured to execute the control method according to any one of the second aspect of the examples of the disclosure.

According to a fifth aspect of the invention, there is provided a non-transitory computer-readable storage medium, when an instruction in the storage medium is executed by a processor of an apparatus, the apparatus may be caused to execute the control method according to any one of the first aspect or the second aspect of the examples of the disclosure.

The method in the invention has the following beneficial effects that in response to determining that the target device is another terminal device, the wireless smart wearable device connected with the target device is controlled by means of the preset control interface on the terminal device, such that a problem of inconvenient cross-terminal control is solved, a technical effect of efficient remote cross-terminal control of the wireless smart wearable device is achieved, and user experience under device interconnection scenarios is improved.

It is to be understood that the above general description and the following detailed description are merely illustrative and explanatory, and cannot limit the disclosure.

### BRIEF DESCRIPTION OF THE DRAWINGS

The drawings here are incorporated into the description as a constituent part of the description, illustrate examples conforming to the disclosure, and serve to explain principles of the disclosure along with the description.
Fig. 1 is a flowchart of a control method for a wireless smart wearable device according to an example;
Fig. 2 illustratively shows a schematic diagram of a preset control interface of a terminal device according to an example;
Fig. 3 is a flowchart of a control method for a wireless smart wearable device according to an example;
Fig. 4 is a flowchart of a method for controlling a wireless smart wearable device according to control information in S302 according to an example;
Fig. 5 is a flowchart of a control method for a Bluetooth headset according to an example;
Fig. 6 is a block diagram of a control apparatus for a wireless smart wearable device according to an example;
Fig. 7 is a block diagram of a control apparatus for a wireless smart wearable device according to an example; and
Fig. 8 is a block diagram of a control apparatus for a wireless smart wearable device according to an example.

### DETAILED DESCRIPTION

The examples will be described in detail here and shown in the accompanying drawings illustratively. When the following descriptions relate to the accompanying drawings, unless otherwise specified, the same numeral in different accompanying drawings denotes the same or similar element. The implementations described in the following examples do not denote all implementations consistent with the disclosure. On the contrary, the implementations are only examples of an apparatus and a method consistent with some aspects of the disclosure as detailed herein.

In related technologies, a wireless smart wearable device is usually controlled by a terminal device directly connected with it. However, with the increasing demand of device interconnection scenarios, how to control wireless smart wearable devices by devices that are not directly connected with them is a problem to be solved.

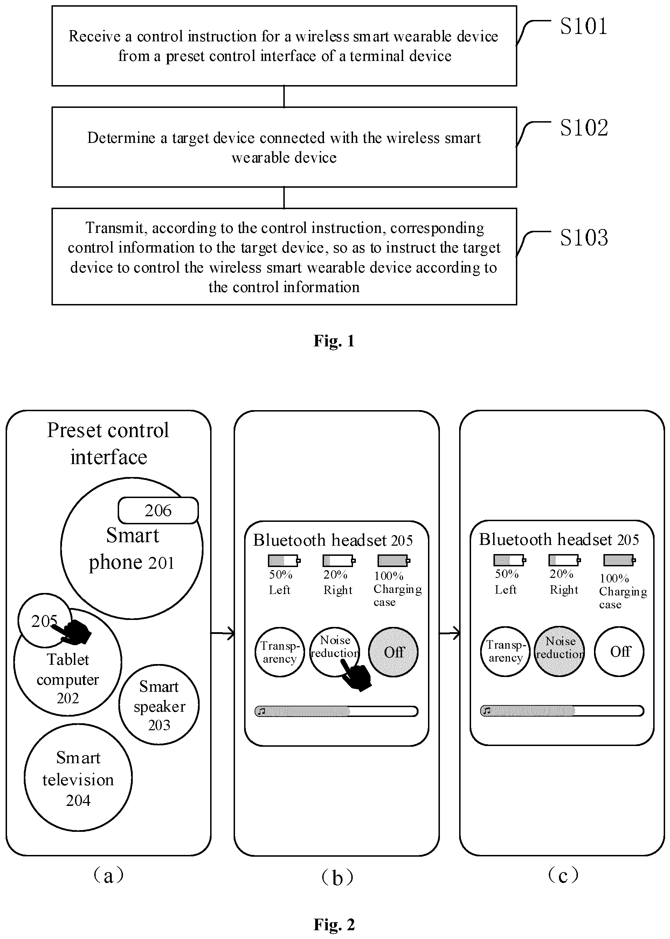

In an example of the disclosure, there is provided a control method for a wireless smart wearable device. The control method is performed by terminal devices. The terminal devices include a smart phone, a tablet computer or other electronic devices having display screens. Fig. 1 is a flowchart of a control method for a wireless smart wearable device according to an example. As shown in Fig. 1, the control method includes the following steps:

S101, a control instruction for the wireless smart wearable device is received from a preset control interface of a terminal device.

S102, a target device connected with the wireless smart wearable device is determined.

S103, according to the control instruction, corresponding control information is transmitted to the target device, so as to instruct the target device to control the wireless smart wearable device according to the control information.

In an example of the disclosure, in order to solve problems in related technologies, there is provided a control method for the wireless smart wearable device. The control method is performed by the terminal device. The control instruction of the wireless smart wearable device is received from the preset control interface of the terminal device, the target device connected with the wireless smart wearable device is determined, and according to the control instruction, corresponding control information is transmitted to the target device, so as to instruct the target device to control the wireless smart wearable device according to the control information. According to the control method for the wireless smart wearable device in the disclosure, in response to determining that the target device is another terminal device, the wireless smart wearable device connected with the target device is controlled by means of the preset control interface on the terminal device, such that a problem of inconvenient cross-terminal control is solved, a technical effect of efficient remote cross-terminal control of the wireless smart wearable device is achieved, and user experience under device interconnection scenarios is improved.

In S101, the wireless smart wearable devices include a Bluetooth headset, a smart bracelet, virtual reality (VR) glasses, augmented reality (AR) glasses or other smart wearable devices that may be connected with the terminal devices through wireless communication. The preset control interface displayed by the terminal device may include any icon that may display and mark a device connected with the wireless smart wearable device, and an icon that may display and control the wireless smart wearable device. In an example, a user may perform corresponding touch operation on the preset control interface displayed by the terminal device to issue a control instruction for the wireless smart wearable device, and the terminal device can receive the control instruction. For example, the user issues the control instruction to the terminal device by means of touching the icon of the wireless smart device displayed on the preset control interface, for example, by clicking on the icon of the wireless smart device and then making an interface including various control instructions pop up. The user selects the corresponding control instruction on the interface. The control instructions including any instructions corresponding to the wireless smart wearable device. For example, when the wireless smart wearable device is a Bluetooth headset, a control instruction interface includes headset power display, headset volume adjustment, headset noise reduction mode switching, etc.; and when the wireless smart wearable device is a smart bracelet, a control instruction interface includes bracelet power display, message notification settings, bracelet alarm settings, etc.

In S102, the target device connected with the wireless smart wearable device may be any terminal device, and for example, may be a terminal device including the preset control interface, or other terminal devices. A method for determining the target device may include the step of obtaining information of a connected device from the wireless smart wearable device, and for example, according to a media access control (MAC) address of the wireless smart wearable device, information of the target device is obtained from the wireless smart wearable device; and alternatively, may include the step of obtaining information of the wireless smart wearable device from another terminal device wirelessly connected with the terminal device, so as to determine information of a device connected with a wireless smart wearable device to be controlled.

In S103, the control instruction received from the preset control interface may be converted to the control information in any way, and the control information is information that may call a control protocol between the target device and the wireless smart wearable device. In response to determining that the target device is the terminal device including the preset control interface, the wireless smart wearable device is directly controlled by means of the control information. In response to determining that the target device is another terminal device, the terminal device transmits the control information corresponding to the control instruction to the target device, so as to instruct the target device to control the wireless smart wearable device according to the control information. A transmission way may be wired communication or wireless communication, such as Bluetooth. After completing control of the wireless smart wearable device according to the control instruction, the target device transmits corresponding response information to the terminal device, and the terminal device updates a control interface corresponding to the icon of the wireless smart wearable device according to the response information.

In an example of the disclosure, the control instruction of the wireless smart wearable device is received from the preset control interface of the terminal device, the target device connected with the wireless smart wearable device is determined, and according to the control instruction, the corresponding control information is transmitted to the target device, so as to instruct the target device to control the wireless smart wearable device according to the control information. In response to determining that the target device is another terminal device, the wireless smart wearable device connected with the target device is controlled by means of the preset control interface on the terminal device, such that a problem of inconvenient cross-terminal control is solved, a technical effect of efficient remote cross-terminal control of the wireless smart wearable device is achieved, and user experience under device interconnection scenarios is improved.

In an example of the disclosure, in response to determining that the target device is another terminal device, the step that according to the control instruction, corresponding control information is transmitted to the target device includes the following steps that the control information corresponding to the control instruction is formed by an application corresponding to the preset control interface, and the control information is transmitted to the target device.

In response to determining that the target device is another terminal device, the terminal device forms the control information corresponding to the control instruction by means of the application corresponding to the preset control interface, and the control information corresponding to the control instruction is transmitted to the target device through connection between the target device and the terminal device. For example, synchronization of the control information between the terminal device and the target device is achieved by means of distributed instructions.

In an example, when the user issues the corresponding control instruction through the corresponding touch operation on the preset control interface, the application program corresponding to the preset control interface (that is, the application program running and displaying the preset control interface) forms the control information corresponding to the control instruction according to a preconfigured corresponding relationship between the control instruction and the control information, and then the terminal device sends the control information to the target device. For example, when the control instruction is to increase volume of headset, the control information C1 corresponding to increasing the volume of headset can be formed; and when the control instruction is to decrease the volume of headset, the control information C2 corresponding to decreasing the volume of headset can be formed. In this way, the target device can control the wireless smart wearable device correspondingly according to different control information received.

In an example of the disclosure, the step that the control instruction of the wireless smart wearable device is received from the preset control interface of the terminal device includes the following step that the control instruction on the control interface of the wireless smart wearable device is received, the control interface including an interface corresponding to an icon corresponding to the wireless smart wearable device on the preset control interface.

The preset control interface of the terminal device includes the icon corresponding to the wireless smart wearable device. The control interface is displayed by clicking on the icon corresponding to the wireless smart wearable device. The control interface includes control instructions of various wireless smart wearable devices.

In an example, the wireless smart wearable device is a Bluetooth headset. Fig. 2 illustratively shows a schematic diagram of a preset control interface of a terminal device. Fig. 2(a) indicates that terminal devices in a current environment include a smart phone 201, a tablet computer 202, a smart speaker 203 and a smart television 204. An icon of the Bluetooth headset is marked by icon 205. Icon 206 in the smart phone 201 indicates that the preset control interface is displayed on the smart phone 201. The icon 205 of the Bluetooth headset is displayed on the tablet computer 202, which indicates that the Bluetooth headset is connected with the tablet computer 202. When the icon 205 of the Bluetooth headset in Fig. 2(a) is clicked on, the control interface including various control instructions in Fig. 2(b) pops up. The control interface includes power display of the Bluetooth headset, a volume adjustment bar of the Bluetooth headset and noise reduction mode selection of the Bluetooth headset, gray indicating that a noise reduction function of the headset is currently off. When a user wants to control the noise reduction function to be turned on, he/she clicks on a noise reduction icon on the control interface, to trigger a corresponding control instruction, and then the interface may be converted to an interface as shown in Fig. 2(c), which indicates that the noise reduction function of the headset is turned on.

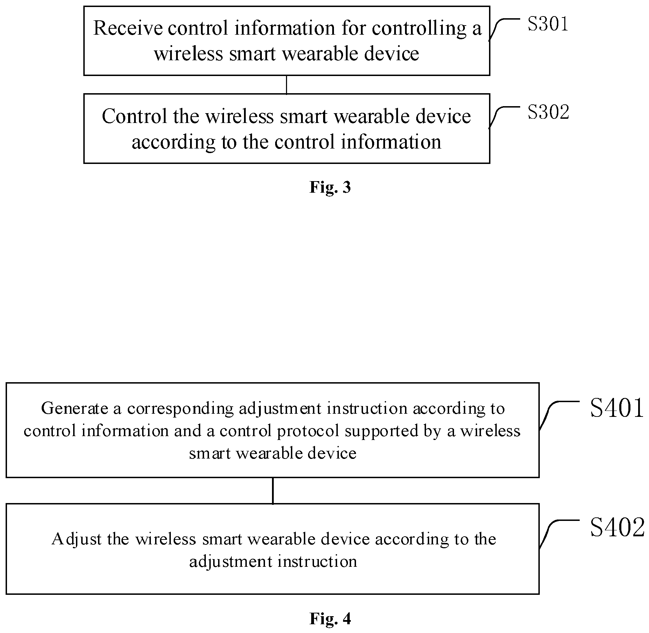

In an example of the disclosure, there is provided a control method for a wireless smart wearable device. The control method is performed by a target device. The target device is a terminal device connected with the wireless smart wearable device. Fig. 3 is a flowchart of a control method for a wireless smart wearable device according to an example. As shown in Fig. 3, the control method includes the following steps:
S301, control information for controlling the wireless smart wearable device is received.
S302, the wireless smart wearable device is controlled according to the control information.

After receiving the control information for controlling the wireless smart wearable device, the target device controls the smart wearable device according to the control information, and then transmits a response information to the terminal device after control is completed, so as to notify the terminal device that the control of the wireless smart wearable device is completed, and make the terminal device update a control interface. A method for the target device to receive the control information for controlling the wireless smart wearable device may include the following steps that an application that is the same as an application corresponding to the preset control interface is started in the target device, and the control information is received on the basis of distributed instructions.

In an example of the disclosure, Fig. 4 is a flowchart of a method for controlling the wireless smart wearable device according to the control information in S302 according to an example. As shown in Fig. 4, the method includes the following steps:
S401, a corresponding adjustment instruction is generated according to the control information and a control protocol supported by the wireless smart wearable device.
S402, the wireless smart wearable device is adjusted according to the adjustment instruction.

After receiving the control information, the target device calls the control protocol supported by the wireless smart wearable device, generates the adjustment instruction in the control protocol corresponding to the control information according to the control information, and adjusts the wireless smart wearable device according to the adjustment instruction. For example, the wireless smart wearable device is a Bluetooth headset and control information includes switching a noise reduction mode from an off state to an on state. A control protocol of the Bluetooth headset is called in an application that is the same as an application corresponding to the preset control interface in the target device, an adjustment instruction for switching the noise reduction mode of the Bluetooth headset from the off state to the on state is generated, and the noise reduction mode of the Bluetooth headset is turned on according to the adjustment instruction.

In an example of the disclosure, when the wireless smart wearable device is a Bluetooth headset, the control protocol includes a musical instrument digital interface (MIDI) protocol.

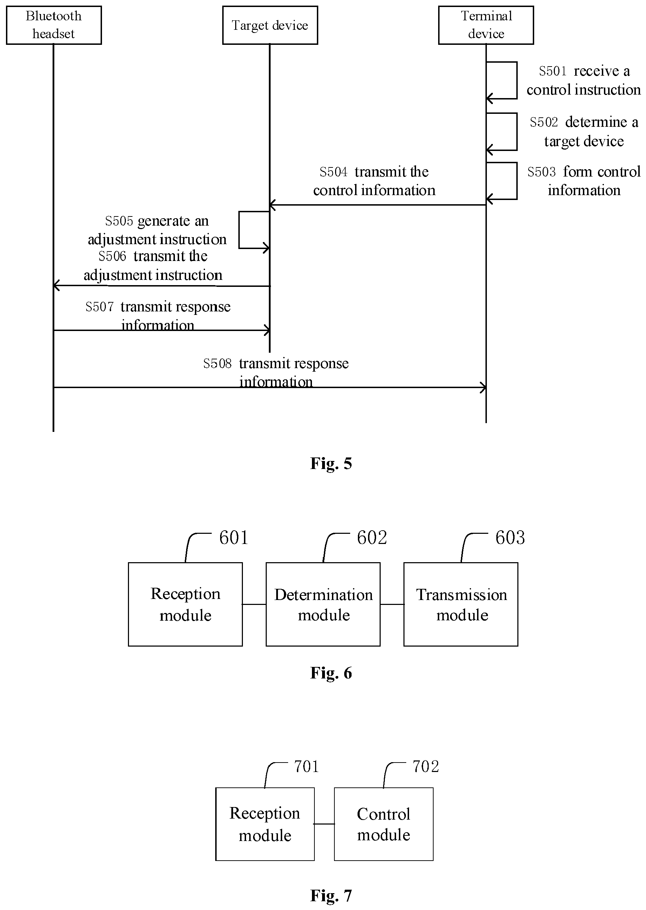

In an example of the disclosure, with a Bluetooth headset as the wireless smart wearable device for example, in response to determining that the target device is another terminal device, there is provided a control method for a Bluetooth headset. Fig. 5 is a flowchart of a control method for a Bluetooth headset according to an example. As shown in Fig. 5, the control method includes the following steps:
S501, a control instruction on a control interface of the Bluetooth headset is received.

The control interface includes an interface corresponding to an icon corresponding to the Bluetooth headset on a preset control interface.

S502, the target device connected with the Bluetooth headset is determined according to an MAC address of the Bluetooth headset.

S503, according to the control instruction, control information corresponding to the control instruction is formed by an application corresponding to the preset control interface.

S504, the terminal device transmits the control information to the target device.

S505, the target device generates a corresponding adjustment instruction according to the control information and a control protocol supported by the Bluetooth headset.

The control protocol includes an MIDI protocol.

S506, the target device transmits the adjustment instruction to the Bluetooth headset to adjust the Bluetooth headset.

S507, the Bluetooth headset transmits response information based on the adjustment instruction to the target device.

S508, the target device transmits response information based on the control information to the terminal device.

In an example of the disclosure, there is provided a control apparatus for a wireless smart wearable device. The control apparatus is suitable for a terminal device displaying a preset control interface. Fig. 6 is a block diagram of a control apparatus for a wireless smart wearable device according to an example. As shown in Fig. 6, the control apparatus includes:
a reception module 601 configured to receive a control instruction for the wireless smart wearable device from the preset control interface of the terminal device;
a determination module 602 configured to determine a target device connected with the wireless smart wearable device; and
a transmission module 603 configured to transmit, according to the control instruction, corresponding control information to the target device, so as to instruct the target device to control the wireless smart wearable device according to the control information.

In an example, the transmission module 603 is further configured to:
form, in response to determining that the target device is another terminal device, the control information corresponding to the control instruction by an application corresponding to the preset control interface, and transmit the control information to the target device.

In an example, the determination module 602 is further configured to:
determine the target device connected with the wireless smart wearable device according to an MAC address of the wireless smart wearable device.

In an example, the reception module 601 is further configured to:
receive the control instruction on a control interface of the wireless smart wearable device, the control interface including an interface corresponding to an icon corresponding to the wireless smart wearable device on the preset control interface.

In an example of the disclosure, there is provided a control apparatus for a wireless smart wearable device. The control apparatus is suitable for a target device. Fig. 7 is a block diagram of a control apparatus for a wireless smart wearable device according to an example. As shown in Fig. 7, the control apparatus includes:
a reception module 701 configured to receive control information for controlling the wireless smart wearable device; and
a control module 702 configured to control the wireless smart wearable device according to the control information.

In an example, the control module 702 is further configured to:
generate a corresponding adjustment instruction according to the control information and a control protocol supported by the wireless smart wearable device; and
adjust the wireless smart wearable device according to the adjustment instruction.

In an example, the control protocol includes an MIDI protocol.

For the apparatus in the examples described above, a specific method for each module to execute an operation has been described in detail in the examples relating to the method, and will not be repeated here.

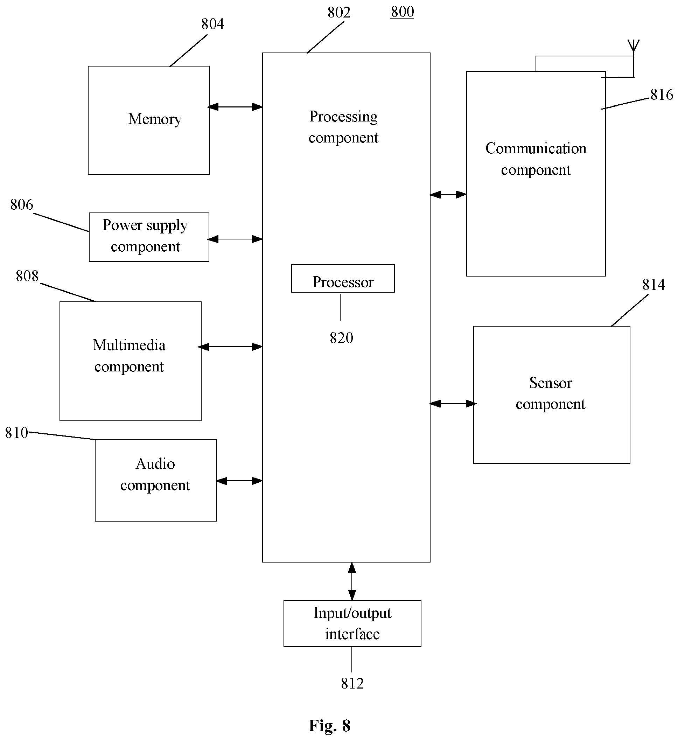

In an example, a control apparatus for a wireless smart wearable device is a terminal device. Fig. 8 is a block diagram of a control apparatus 800 for a wireless smart wearable device according to an example.

With reference to Fig. 8, the apparatus 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls all operations of the apparatus 800, such as operations associated with display, telephone call, data communication, camera operation and recording operation. The processing component 802 may include one or more processors 820 for executing an instruction, so as to complete all or part of the steps of the method. In addition, the processing component 802 may include one or more modules to facilitate interactions between the processing component 802 and other components. For example, the processing component 802 may include a multimedia module to facilitate an interaction between the multimedia component 808 and the processing component 802.

The memory 804 is configured to store various types of data to support the operations on the apparatus 800. Examples of the data include an instruction for any application program or method operating on the apparatus 800, contact data, phone book data, a message, a picture, a video, etc. The memory 804 may be implemented by any type of volatile or nonvolatile memory device or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk.

The power supply component 806 supplies power to various components of the apparatus 800. The power supply component 806 may include a power management system, one or more power supplies, and other components associated with generating, managing and distributing power for the apparatus 800.

The multimedia component 808 includes a screen that provides an output interface between the apparatus 800 and a user. In some examples, the screen may include a liquid crystal display (LCD) and a touch panel (TP). If the screen includes the touch panel, the screen may be implemented as a touch screen to receive an input signal from the user. The touch screen may be configured to display the above preset control interface. The touch panel includes one or more touch sensors to sense touching, sliding and gestures on the touch panel. The touch sensor may sense a boundary of a touching or sliding operation, and detect a duration and pressure related to the touching or sliding operation. In some examples, the multimedia component 808 includes a front camera and/or a back camera. When the apparatus 800 is in an operation mode, such as a shooting mode or a video mode, the front camera and/or the back camera are/is capable of receiving external multimedia data. Each of the front camera and the back camera may be a fixed optical lens system or have a focal length and optical zoom capability.

The audio component 810 is configured to output and/or input an audio signal. For example, the audio component 810 includes a microphone (MIC). The microphone is configured to receive an external audio signal when the apparatus 800 is in operation modes such as a call mode, a recording mode and a speech identification mode. The received audio signal may be further stored in the memory 804 or transmitted via the communication component 816. In some examples, the audio component 810 further includes a speaker for outputting an audio signal.

The I/O interface 812 provides an interface between the processing component 802 and a peripheral interface module. The peripheral interface module may be a keyboard, a click wheel, a button, etc. The buttons may include, but are not limited to, a home button, a volume button, a start button and a lock button.

The sensor component 814 includes one or more sensors for providing various aspects of state assessment for the apparatus 800. For example, the sensor component 814 is capable of detecting an on/off state of the apparatus 800 and relative positioning of the components such as a display and a keypad of the apparatus 800, and the sensor component 814 is further capable of detecting position change of the apparatus 800 or an component of the apparatus 800, presence or absence of contact between the user and the apparatus 800, an orientation or acceleration/deceleration of the apparatus 800 and temperature change of the apparatus 800. The sensor component 814 may include a proximity sensor configured to detect presence of a nearby object without any physical contact. The sensor component 814 may further include an optical sensor, such as a complementary metal-oxide-semiconductor (CMOS) or charge-coupled device (CCD) image sensor, which is used in imaging applications. In some examples, the sensor component 814 may further include an acceleration sensor, a gyroscope sensor, a magnetic sensor, a pressure sensor or a temperature sensor.

The communication component 816 is configured to facilitate wired or wireless communication between the apparatus 800 and other devices. The apparatus 800 may access a wireless network based on a communication standard, such as WiFi, the 2nd generation mobile communication technology (2G) or the 3rd generation mobile communication technology (3G), or their combination. In an example, the communication component 816 receives a broadcast signal or broadcast related information from an external broadcast management system via a broadcast channel. In an example, the communication component 816 further includes a near field communication (NFC) module to facilitate short-range communication. For example, the NFC module may be implemented on the basis of a radio frequency identification (RFID) technology, an infrared data association (IrDA) technology, an ultra wide band (UWB) technology, a Bluetooth (BT) technology or other technologies.

In an example, the apparatus 800 may be implemented by one or more of an application specific integrated circuit (ASIC), a digital signal processor (DSP), a digital signal processing device (DSPD), a programmable logic device (PLD), a field programmable gate array (FPGA), a controller, a microcontroller, a microprocessor or other electronic components, thus executing the above-mentioned method.

In an example, there is further provided a non-transitory computer-readable storage medium including an instruction, such as the memory 804 including an instruction. The instruction may be executed by the processor 820 of the apparatus 800 so as to complete the above-mentioned method. For example, the non-transitory computer-readable storage medium may be ROM, a random access memory (RAM), CD-ROM, a magnetic tape, a floppy disk, an optical data storage device, etc.

According to the non-transitory computer-readable storage medium, when an instruction in the storage medium is executed by a processor of an apparatus, the apparatus may be caused to execute the control method for a wireless smart wearable device. The method includes any one of the above-mentioned methods.

Those skilled in the art could easily conceive of other implementation solutions of the disclosure upon consideration of the description and practice of the disclosure disclosed here.

It is to be understood that the disclosure is not limited to a precise structure which has been described above and illustrated in the accompanying drawings, and can be modified or changed in various ways without departing from the scope. The scope of the disclosure is limited merely by the appended claims.

## Claims

1. A control method for a wireless smart wearable device, performed by a terminal device displaying a preset control interface and comprising:
receiving (S101, S501) a control instruction for the wireless smart wearable device from the preset control interface of the terminal device;
determining (S102, S502) a target device connected with the wireless smart wearable device; and
transmitting (S103, S504), according to the control instruction, corresponding control information to the target device, so as to instruct the target device to control the wireless smart wearable device according to the control information.

2. The control method for the wireless smart wearable device according to claim 1, wherein transmitting (S103, S504), according to the control instruction, corresponding control information to the target device comprises:
in response to determining that the target device is another terminal device, forming (S503) the control information corresponding to the control instruction by an application corresponding to the preset control interface, and transmitting the control information to the target device.

3. The control method for the wireless smart wearable device according to claims 1 or 2, wherein determining (S102, S502) the target device connected with the wireless smart wearable device comprises:
determining the target device connected with the wireless smart wearable device according to a media access control ,MAC, address of the wireless smart wearable device.

4. The control method for the wireless smart wearable device according to any of claims 1 to 3, wherein receiving (S101, S501) the control instruction of the wireless smart wearable device from the preset control interface of the terminal device comprises:
receiving the control instruction on a control interface of the wireless smart wearable device, the control interface comprising an interface corresponding to an icon corresponding to the wireless smart wearable device on the preset control interface.

5. A control method for a wireless smart wearable device, performed by a target device and comprising:
receiving (S301) control information for controlling the wireless smart wearable device; and
controlling (S302) the wireless smart wearable device according to the control information.

6. The control method for the wireless smart wearable device according to claim 5, wherein controlling (S302) the wireless smart wearable device according to the control information comprises:
generating (S401, S505) a corresponding adjustment instruction according to the control information and a control protocol supported by the wireless smart wearable device; and
adjusting (S402) the wireless smart wearable device according to the adjustment instruction.

7. The control method for the wireless smart wearable device according to claim 6, wherein the control protocol comprises a musical instrument digital interface ,MIDI, protocol.

8. A control apparatus (800) for a wireless smart wearable device, comprising:
touch screen configured to display a preset control interface;
a processor (820), and
a memory (804) configured to store an instruction executable by the processor (820),
wherein the processor (820) is configured to:
receive a control instruction for the wireless smart wearable device from the preset control interface;
determine a target device connected with the wireless smart wearable device; and
transmit, according to the control instruction, corresponding control information to the target device, so as to instruct the target device to control the wireless smart wearable device according to the control information.

9. The control apparatus (800) for the wireless smart wearable device according to claim 8, wherein the processor (820) is further configured to:
form, in response to determining that the target device is another terminal device, the control information corresponding to the control instruction by an application corresponding to the preset control interface, and transmit the control information to the target device.

10. The control apparatus (800) for the wireless smart wearable device according to claims 8 or 9, wherein the processor (820) is further configured to:
determine the target device connected with the wireless smart wearable device according to a media access control ,MAC, address of the wireless smart wearable device.

11. The control apparatus (800) for the wireless smart wearable device according to any of claims 8 to 10, wherein the processor (820) is further configured to:
receive the control instruction on a control interface of the wireless smart wearable device, the control interface comprising an interface corresponding to an icon corresponding to the wireless smart wearable device on the preset control interface.

12. A control apparatus (800) for a wireless smart wearable device, comprising:
a processor (820), and
a memory (804) configured to store an instruction executable by the processor (820),
wherein the processor (820) is configured to:
receive control information for controlling the wireless smart wearable device; and
control the wireless smart wearable device according to the control information.

13. The control apparatus (800) for the wireless smart wearable device according to claim 12, wherein the processor (820) is further configured to:
generate a corresponding adjustment instruction according to the control information and a control protocol supported by the wireless smart wearable device; and
adjust the wireless smart wearable device according to the adjustment instruction;
preferably, the control protocol comprises a musical instrument digital interface ,MIDI, protocol.

14. A non-transitory computer-readable storage medium, wherein when an instruction in the storage medium is executed by a processor of an apparatus, the apparatus is caused to execute the control method for a wireless smart wearable device according to any of claims 1 to 4.

15. A non-transitory computer-readable storage medium, wherein when an instruction in the storage medium is executed by a processor of an apparatus, the apparatus is caused to execute the control method for a wireless smart wearable device according to any of claims 5 to 7.
